# EUROPEAN PATENT APPLICATION

(11) **EP 4 726 588 A1**
(43) Date of publication of application: **15.04.2026**
(21) Application number: 24383094.0
(22) Date of filing: 08.10.2024
(51) Int. Cl.: G06F 21/57, G06F 8/65

(54) **QUANTUM-RESISTANT UPDATE SCHEME FOR SOFTWARE ON A SECURE ELEMENT**

(71) Applicant: Giesecke+Devrient Mobile Security Germany GmbH, 81677 München (DE)
(72) Inventor: GARRIDO, Jose Antonio, 08820 El Prat de Llobregat (Barcelona) (ES); GIFRE, Clara, 08820 El Prat de Llobregat (Barcelona) (ES); MUNTANER, Joan Francesc, 08820 El Prat de Llobregat (Barcelona) (ES); PATIÑO, David, 08820 El Prat de Llobregat (Barcelona) (ES); RUAU, Federico, 08820 El Prat de Llobregat (Barcelona) (ES); TOLOS, Nadia, 08820 El Prat de Llobregat (Barcelona) (ES)
(74) Representative: LKGLOBAL Partnerschaftsgesellschaft mbB

(57) **Abstract**

A method for updating a software module on a secure element (200, SE) includes the following steps: establishing a communication session between an update service (100) and the SE (200); securing the communication session by quantum-resistant cryptographic measures; transmitting data packages from the update service (100) to the SE (200) via the secured communication session to update the software module; and clearing the communication session when the data packages are successfully transmitted to the SE (200).

## Description

The description relates to a method for updating a software module on a secure element (SE).

A secure element is a tamper resistant element, TRE, that provides a secure memory and execution environment within a smart card/ device in which application code and application data can be securely stored and administered. The secure element ensures that access to the data stored on the card is provided only when authorized.

For example, a secure element is designed to be used in telecommunication products, such as mobile devices, and is configured to store one or more electronic subscriber profiles, in particular electronic subscriber identification module (eSIM) profiles, that may allow mobile devices to connect to one or more mobile networks. A subscriber profile (e.g., eSIM profile) may be generated by a mobile network operator (MNO) and may be downloaded to a mobile network device. The subscriber profile may then be installed on the secure element of the mobile device and used for communication over a corresponding mobile network by the mobile device.

Historically, a secure element's software does not vary once it has surpassed the production phase. This means that if any problem is found that is related to the software within it (new attacks or vulnerabilities, new updates on sector specification, the expected life cycle of the devices using it), the only possible action is to change the whole secure element. This makes it particularly difficult to keep up to date with the market needs in terms of production (with software updates after production being impossible), especially when the production is bound to be executed within a certified environment in the factory.

Generally speaking, a secure element is used in another device (e.g., user device, end device), and includes its own operating system and memory. The SE typically includes a memory that stores instructions (code), and a processor that is configured to execute the instructions.

It may be considered an object to reduce the vulnerability of an update process for software modules on a secure element.

This object is solved by the method described herein.

According to an aspect, a method for updating a software module on a secure element, SE, is described. The method comprises establishing a communication session between an update service and the SE, securing the communication session by quantum-resistant cryptographic measures, transmitting data packages from the update service to the SE via the secured communication session to update the software module, and clearing the communication session when the data packages are successfully transmitted to the SE.

Quantum-resistant cryptography measures refer to cryptographic schemes that are deemed secure (i.e., able to withstand an attack at least for a certain period of time) against attacks using quantum computers and respective algorithms.

The security of quantum-resistant cryptographic measures relies on mathematical problems which are currently deemed to be difficult to solve even with quantum computers. The quantum-resistant cryptographic measures may be based on one or a combination of (a) the difficulty of efficiently decoding general error-correcting codes (so-called code-based cryptography), (b) the difficulty of certain problems in mathematical lattices (so-called lattice-based cryptography), or (c) security properties of cryptographic hash functions (so-called hash-based cryptography).

According to an embodiment, the data packages contain software update packages for an operating system of the SE.

Especially the update process of the operating system is crucial for a secure element. Therefore, this update process requires particular security.

According to an embodiment, securing the communication session includes establishing a key for the communication session.

The established key for the communication session is used for securing data that is received and managed by or transmitted to an update agent like an operating system update agent.

According to another embodiment, establishing a key for the communication session includes using a key-encapsulation mechanism (KEM), wherein the SE generates a keypair of public-private keys, transmits the public key to the update service, and the update service uses the generated public key and generates an encapsulation and a shared secret, and the shared secret is transmitted to the SE, wherein the update service generates a protected image including the data packages using an encryption algorithm using keys derived from the shared secret.

According to another embodiment, establishing a key for the communication session includes using a key-encapsulation mechanism (KEM), generating a keypair of public-private keys, and using a live-unicast key-handling method, wherein the update service requests a public key from the SE, the SE generates the keypair of public-private keys and sends the public key to the update service.

According to another embodiment, establishing a key for the communication session includes using a key-encapsulation mechanism (KEM), wherein the SE includes a unique keypair of public-private keys, wherein the update service requests the public key by an out-of-band mechanism.

According to another embodiment, establishing a key for the communication session includes using a key-encapsulation mechanism (KEM), wherein each of a plurality of SEs includes the same keypair of public-private keys, wherein the update service requests the public key by an out-of-band mechanism.

According to another embodiment, establishing a key for the communication session includes obtaining various shared secrets, namely a first secret and a second secret, wherein the first secret is generated with classical cryptography and the second secret is generated using quantum resistant procedures.

For example, the first secret is generated in accordance with known encryption schemes like RSA (Rivest, Shamir, Adleman) and DLP (Discrete Logarithm Problem), or other known asymmetric key algorithms. The second secret is generated based on quantum resistant procedures as described above.

According to another embodiment, transmitting data packages from the update service to the SE via the secured communication session includes generating, by the update service, a software image including the data packages, generating, by the update service, an update package by encrypting the software image using an NTRU-algorithm. performing authentication between update service and SE, and transmitting the update package and the NTRU-algorithm to the SE.

According to another embodiment, transmitting data packages from the update service to the SE via the secured communication session includes generating, by the update service, a software image including the data packages, generating, by the update service, an update package by encrypting the software image using a Classic McEliece-algorithm, performing authentication between update service and SE, and transmitting the update package and the Classic McEliece-algorithm to the SE.

The subject matter will hereinafter be described in conjunction with the following drawing figures, wherein like numerals denote like elements, and wherein:
Fig. 1 is a schematic representation of an update process of a software module on a secure element;
Fig. 2 is a schematic representation of a method for updating a software module on a secure element;
Fig. 3 is a schematic representation of a part of an update process of a software module;
Fig. 4 is a schematic representation of a part of an update process of a software module;
Fig. 5 is a schematic representation of a part of an update process of a software module;
Fig. 6 is a schematic representation of a part of an update process of a software module;
Fig. 7 is a schematic representation of a part of an update process of a software module;
Fig. 8 is a schematic representation of a part of an update process of a software module;

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

A greater understanding of the described subject matter may be obtained through a review of the illustrations together with a review of the detailed description that follows.

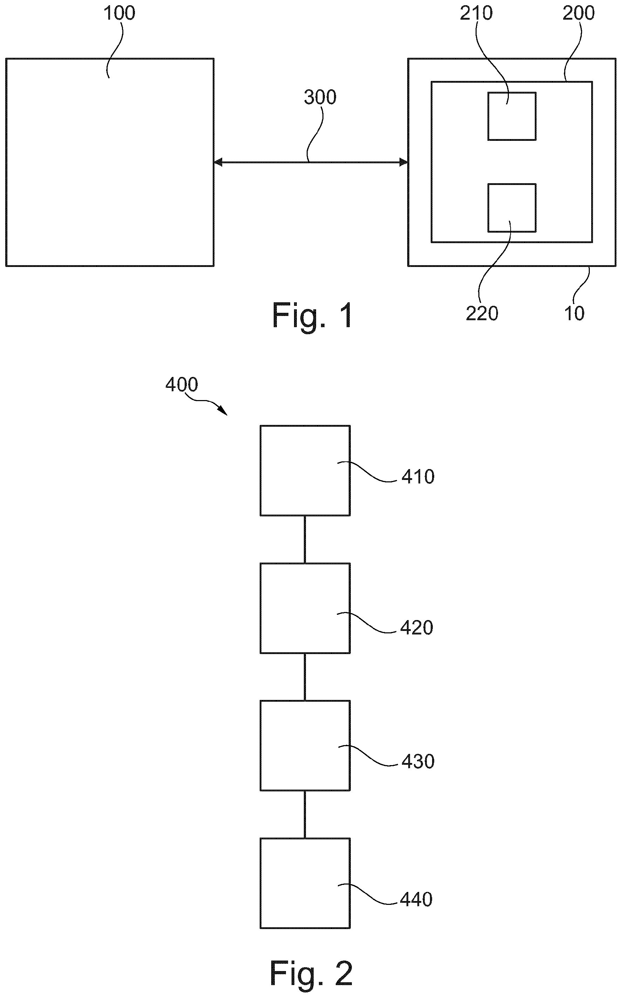

Fig. 1 shows the components involved in an update process of a software module. An update service 100 (typically an off-card entity or a remote unit) provides updates to devices 10 including a secure element 200. The update service 100 establishes a communication link 300 to the device 10 and/or directly to the secure element 200. The communication required for providing the data packages to the SE 200 is exchanged between the update service 100 and the SE 200 via this communication link 300.

For performing the tasks required during operation of the SE 200, the SE 200 includes a memory 220 for storing instructions (code) and a processor 210 for executing at least some of these instructions. However, the present description focusses on the update process and not on the operation of the SE 200.

With reference to Fig. 1, Fig. 2 shows an example of a method 400 for updating a software module on the secure element. The software module to be updated is typically stored in the memory 220 of the SE 200. The update for the software module may contain code and/or data.

In a first step 410, a communication session is established between the update service 100 and the SE 200. In a second step 420, the communication session is secured by quantum-resistant cryptographic measures. In a third step 430, data packages are transmitted from the update service 100 to the SE 200 via the secured communication session to update the software module. In a fourth step 440, the communication session is cleared when the data packages are successfully transmitted to the SE 200. While the steps are described in a certain order in this example, it should be understood that at least some steps may be carried out in a different order.

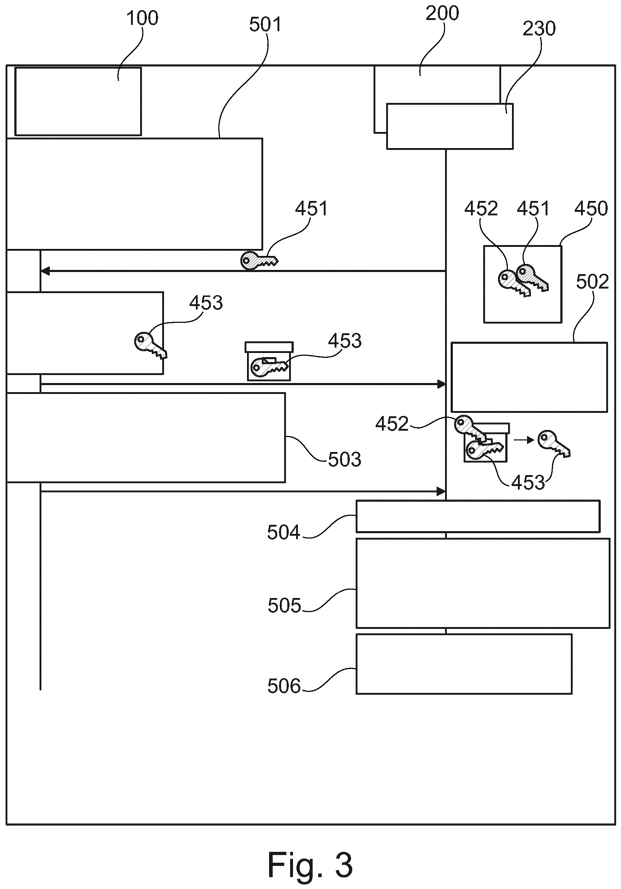

Fig. 3 describes an update scheme using key encapsulation mechanisms (KEM). This example particularly uses FrodoKEM. This provides a quantum-resistant approach for transmitting software updates between the update service 100 and the SE 200.

The example of Fig. 3 describes an approach to securely update or change a software image of a secure element 200, by providing it with a securely authenticated and encrypted package that a separate component from the preexistent operating system, OS, can decrypt and verify before allowing the execution of the newly provided software image.

The SE 200 generates a key pair 450 with a public key 451 and a private key 452. At 501, the update service 100 generates an image containing the plain image of the update data and optionally information regarding the update to be performed. The public key 451 is transmitted by the SE 200 to the update service 100. The update service 100 uses the public key 451 and generates an encapsulation of the shared secret 453. The encapsulation with the shared secret 453 is transmitted to the SE 200, and at 502, the SE 200 obtains the shared secret 453 from the encapsulation using the private key 452. At 503, the update service 100 generates a protected image package using a secure encryption algorithm, using keys derived from the shared secret 453. The protected image package can now be transmitted to the SE 200. At 504, the SE 200 may verify if the protected image package is acceptable. At 505, the SE 200 decrypts the corresponding encryption algorithm using the shared secret 453 and writes the image package into the memory of the SE 200 to update the OS. AT 506, the SE 200 verifies if the OS was properly loaded and boots the new OS.

The focus of this example is to ensure that the authentication part of the process can be performed in a quantum-resistant manner and using asymmetric cryptography. This authentication shall then be used to obtain a shared secret from which keys can be derived which will encrypt the image. This allows having symmetric cryptography in the encryption scheme without incurring in the risk of leaking the key all the while being quantum-safe. The main aim for this is to ensure that the whole process cannot be easily tampered with quantum logic. To do so, the proposal is to use the FrodoKEM algorithm in the TRE 200 in order to derive a common secret which will be used to encrypt the image.

The example of Fig. 3 particularly relates to the embodiment in which establishing a key for the communication session includes using a key-encapsulation mechanism (KEM), wherein the SE generates a keypair of public-private keys, transmits the public key to the update service, and the update service uses the generated public key and generates an encapsulation and a shared secret, and the shared secret is transmitted to the SE, wherein the update service generates a protected image including the data packages using an encryption algorithm using keys derived from the shared secret.

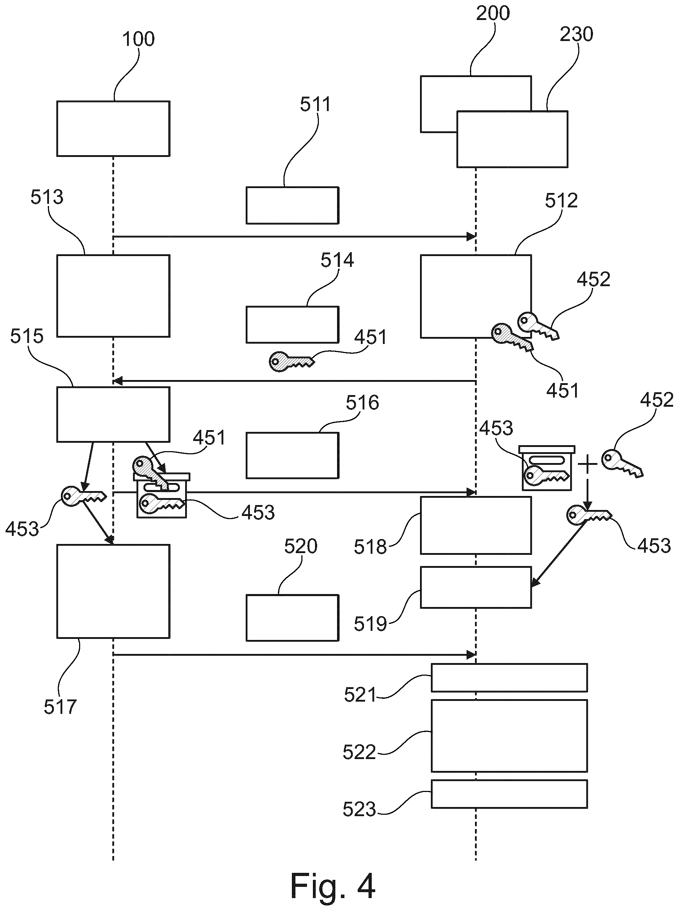

Fig. 4 shows an example which, in a first step, generates a keypair of public-private keys and which uses live unicast key handling method agnostic to any particularities of any KEM algorithm.

The proposal is a method to securely update or change a software image from a secure element, by providing it with a securely authenticated and encrypted package that a separate component from the preexistent OS can decrypt and verify before allowing the execution of the newly provided software image.

At 511, the update service 100 requests a new public key from the SE 200. At 512, the SE 200 generates a new key pair (e.g. an ephemeral key pair) with a public key 451 and a private key 452. At 513, the update service 100 generates an image containing the plain image and optionally information regarding the update. At 514, the SE 200 sends the public key 451 to the update service 100. At 515, the update service 100 generates a shared secret 453 and an encapsulation of the shared secret 453 with the public key 451. The encapsulation is sent to the update agent 230 of the SE 200 at 516. At 517, the update service 100 derives encryption keys from the shared secret 453 and generates the protected image using a secure encryption algorithm. At 518, the SE 200 obtains the shared secret 453 from the encapsulation using the private key 452, and at 519, the SE 200 derives encryption keys from the shared secret 453. At 520, the update service 100 sends the protected image to the update agent 230. At 521, the SE 200 may verify if the protected image package is acceptable. At 522, the SE 200 decrypts the received image using the corresponding encryption algorithm using the derived keys and writes the image package into the memory of the SE 200 to update the OS. AT 523, the SE 200 verifies if the OS was properly loaded and boots the new OS.

The focus of this example is to ensure that the key exchange step in quantum-resistant KEMs can be performed in a coherent and secure manner that does not create additional weaknesses and maintains the security and integrity of the algorithm. To do so, the proposal is to use a live unicast system. Each keypair is ephemeral and associated to each download. Previous to the download, the update agent generates such keypair. Then, the off-card entity obtains the public key from the update agent and proceeds with the KEM steps as described above. This protocol ensures forward secrecy.

The example of Fig. 4 particularly relates to the embodiment in which establishing a key for the communication session includes using a key-encapsulation mechanism (KEM), generating a keypair of public-private keys, and using a live-unicast key-handling method, wherein the update service requests a public key from the SE, the SE generates the keypair of public-private keys and sends the public key to the update service.

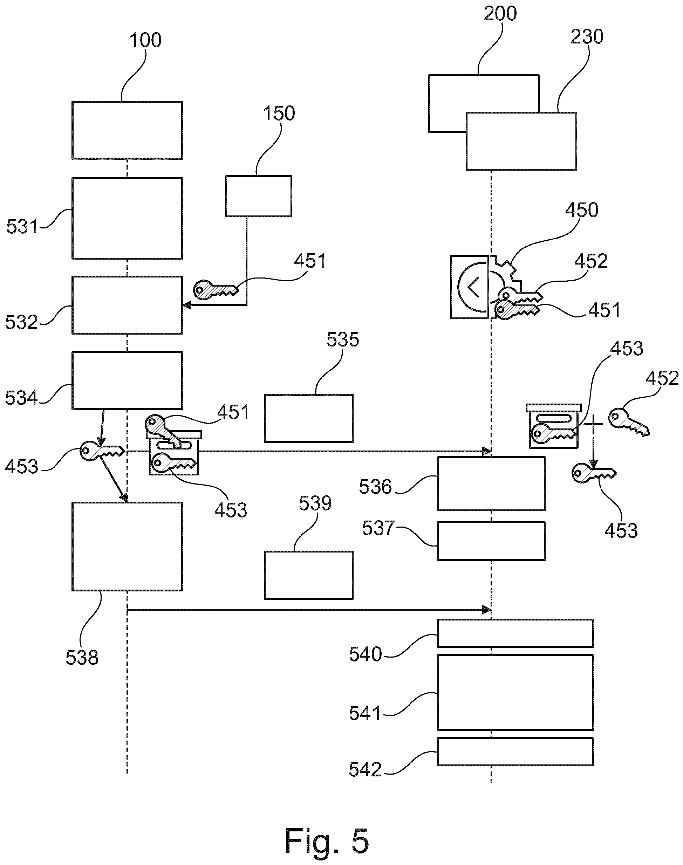

Fig. 5 shows an example which uses a scripted unicast key handling method agnostic to any particularities of any KEM algorithm. This allows performing updates without having to previously communicate with the SE 200 nor having to generate the image on the fly. In this example, the key pair is generated individually for one particular SE 200.

The update agent 230 contains a previously generated key pair 450 with a public key 451 and a private key 452. The key pair 450 may be generated and provided by a remote unit 150.

At 531, the update service 100 generates an image containing the plain image and optionally information regarding the update. At 532, the update service 532 obtains the public key 451 of a certain SE 200 from the remote unit 150 by and out-of-band mechanism. At 534, the update service 100 generates a shared secret 453 and an encapsulation of the shared secret 453 with the public key 451. The encapsulation is sent to the update agent 230 of the SE 200 at 535. At 538, the update service 100 derives encryption keys from the shared secret 453 and generates the protected image using a secure encryption algorithm. At 536, the SE 200 obtains the shared secret 453 from the encapsulation using the private key 452, and at 537, the SE 200 derives encryption keys from the shared secret 453. At 539, the update service 100 sends the protected image to the update agent 230. At 540, the SE 200 may verify if the protected image package is acceptable. At 541, the SE 200 decrypts the received image using the corresponding encryption algorithm using the derived keys and writes the image package into the memory of the SE 200 to update the OS. At 542, the SE 200 verifies if the OS was properly loaded and boots the new OS.

This approach describes a solution for the particular scenario where bilateral communication between the SE 200 and the update service 100 is not possible, so the image has to be pre-generated before sending it. This means that the update service 100 that generates the image should be able to obtain the public key (by any out-of-band medium) before generating the image.

The focus of this approach is to ensure that the key exchange step in a KEM can be performed in a coherent and secure manner when the update service 100 and the IT 230 cannot communicate with each other, i.e. bilateral communication is not possible. Devising the key handling in a KEM applied to the update process of an image is the key step necessary for using key-encapsulation mechanisms in the OS update flow. It is also notable how this provides crypto agility and the possibility of quantum-safe KEMs to be used in the OS update process. To do so, the proposal is to use a scripted unicast system. The KEM keypair will be generated at production and will be unique for that specific SE 200 (this indicates the unicast property). Then, when the update service 100 wants to generate an update image, it will retrieve the public card by any out-of-bands mechanism and use it to follow the common KEM steps. This way, the update service 100 can prepare the entire encrypted image without having to request information from the update agent /TRE 230.

The example of Fig. 5 particularly relates to the embodiment in which establishing a key for the communication session includes using a key-encapsulation mechanism (KEM), wherein the SE includes a unique keypair of public-private keys, wherein the update service requests the public key by an out-of-band mechanism.

As an alternative to the example described with reference to Fig. 5, a scripted multicast key handling method agnostic to any particularities of any KEM algorithm may be provided. In contrast to Fig. 5, where a key pair 450 is sent to an individual SE 200, the key pair is generated for a group of SEs 200, so that a plurality of SEs 200 share the same public key. This approach is called multicast key handling. The steps for this multicast key handling are identical to Fig. 5.

The example relating to the multicast key handling particularly relates to the embodiment in which establishing a key for the communication session includes using a key-encapsulation mechanism (KEM), wherein each of a plurality of SEs includes the same keypair of public-private keys, wherein the update service requests the public key by an out-of-band mechanism.

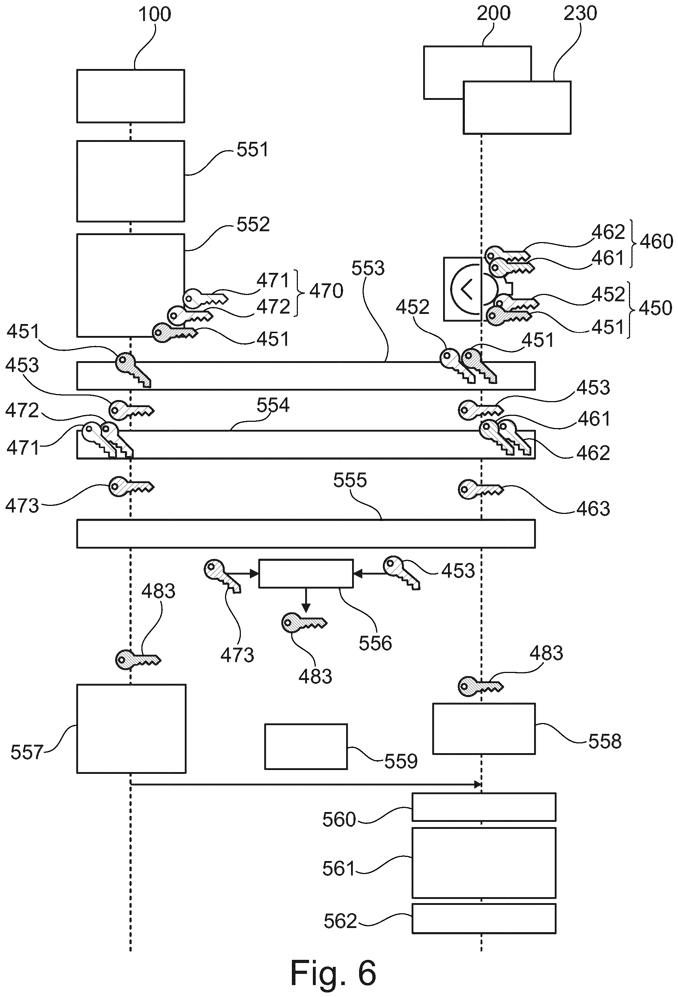

Fig. 6 shows an example of a method that uses a hybrid key establishment procedure for software updates.

This hybrid scheme mainly includes obtaining various shared secrets: one generated with classical cryptography, which ensures the robustness of the system to state-of-the-art attacks, and another shared secret generated using quantum-safe procedures, that would ensure protection against quantum attacks. Then a key derivation function that admits multiple shared secrets has to be used to derive the encryption/decryption keys.

The SE 200 includes two key pairs: a first key pair 450 and a second key pair 460, each of which includes a public key 451, 461 and a private key 452, 462, respectively. Furthermore, the update service 100 includes a third key pair 470 with a public key 471 and a private key 472.

At 551, the update service 100 generates an image containing the plain image and optionally information regarding the update. At 552, the update service 100 receives the public key 451 of the SE 200 and a third key pair 470 with a public key 471 and a private key 472. The third key pair 470 is configured for classical cryptography algorithms.

The SE 200 and the update service 100 follow two established key agreement algorithms. One of them, at 554, following a classical (that is, not quantum-safe) cryptography approach as described in SP800-56A and SP800-56B will generate a classical shared secret 473.

At 553, a shared secret 453 is obtained through KEM. This applies a quantum-safe procedure like the ML-KEM (FIPS203), that will generate the shared secret 453. After following these procedures, the update agent 230 and the update service 100 will have two shared secrets each. Now the key step at 555 is to use a suitable combiner function 556 to obtain a single shared secret 483 from which both the update service 100 and the update agent 230 can derive the corresponding encryption/decryption keys at 557, 558 to generate and process the protected image. At 557, the update service additionally generates the protected image using a secure encryption algorithm and, at 559, sends the protected image to the update agent 230.

An exemplary list of examples of such combiner functions 556 includes: XOR-then-MAC (XtM), dualPRF; simple concatenation, as suggested in NIST SP800-56C, TLS hybrid and other sources; and finally Cascade KDF (CasKDF). Once the update agent 230 and the update service 100 have derived the corresponding encryption keys, the usual OS Update procedure can continue.

At 560, the SE 200 may verify if the protected image package is acceptable. At 561, the SE 200 decrypts the received image using the corresponding encryption algorithm using the derived keys and writes the image package into the memory of the SE 200 to update the OS. AT 562, the SE 200 verifies if the OS was properly loaded and boots the new OS.

The example of Fig. 6 particularly relates to the embodiment in which establishing a key for the communication session includes obtaining various shared secrets, namely a first secret and a second secret, wherein the first secret is generated with classical cryptography and the second secret is generated using quantum resistant procedures.

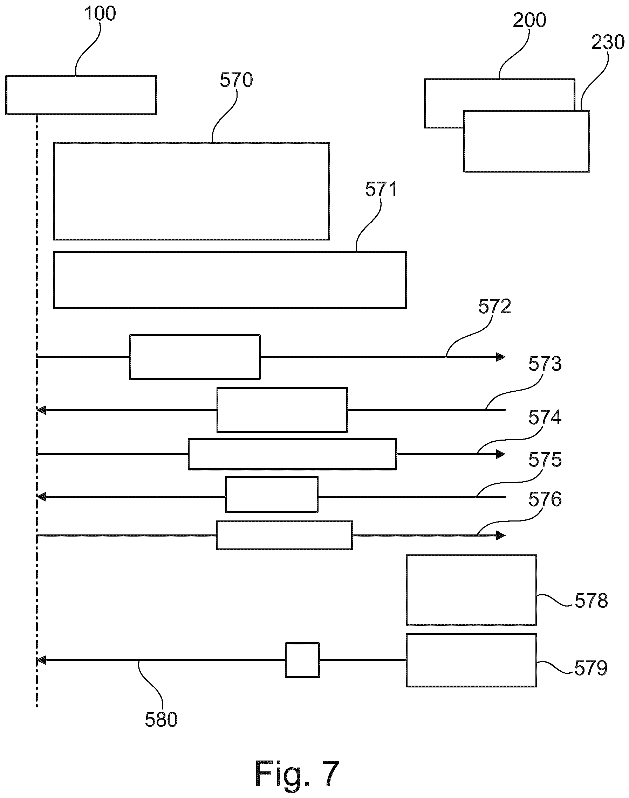

Fig. 7 describes an example of an update encryption security scheme based on an NTRU algorithm.

NTRU is a lattice-based cryptography algorithm that is faster than RSA and ECC and can provide a high level of security against quantum attacks. Its computational and memory requirements are relatively low, making it suitable for embedded systems. NTRU Encrypt is faster and has a smaller key size than RSA for a similar level of security. However, the ciphertext it produces may be larger.

The proposal is a method to securely update or change a software image from a secure element, by providing it with a securely authenticated and encrypted package that a separate component from the preexistent OS can decrypt and verify before allowing the execution of the newly provided software image. While the authentication part can be performed by any means, the focus of this approach is to ensure that the encryption of the package, which needs to be decrypted by the update agent (or any update agent or bootloader allowing for OS changes) is done in a way that it can be considered quantum-resistant. The main aim for this is to ensure that the performed encryption can not be easily tampered with quantum logic. To do so, the proposal is to use the NTRU algorithm to encrypt the OS image that will later be delivered to the SE 200. The decryption of the package will be done by the update agent 230 (or any other bootloader or update agent present in the TRE) and finally enabled.

At 570, the update service 100 generates an image containing the plain image and optionally information regarding the update to be performed. At 571, the update service 100 generates the software module update package, including encrypted package with NTRU algorithm. At 572, an authentication of the software module update package is performed. An authentication acknowledge message may be sent at 573 to the update service 100. Optional update package information may be sent at 574 to the SE 200. At 575, the package is confirmed by the SE 200 to the update service 100. At 576, the software module update package is transmitted to the SE 200. The SE 200 decrypts and loads the software module update package at 578, boots the new OS at 579, and confirms completion of the update process at 580 to the update service 100.

The example of Fig. 7 particularly relates to the embodiment in which transmitting data packages from the update service to the SE via the secured communication session includes generating, by the update service, a software image including the data packages, generating, by the update service, an update package by encrypting the software image using an NTRU-algorithm. performing authentication between update service and SE, and transmitting the update package and the NTRU-algorithm to the SE.

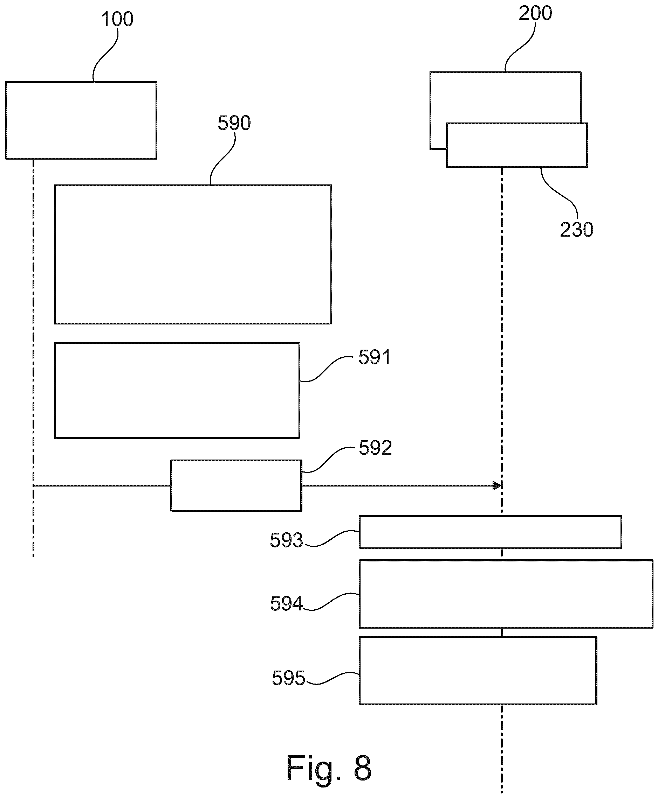

Fig. 8 shows an example of a classic McEliece based encryption scheme for an update process. This may be an alternative to the example described with reference to Fig. 7.

This example describes to securely update or change a software image from a secure element 200, by providing it with a securely authenticated and encrypted package that a separate component from the preexistent OS can decrypt and verify before allowing the execution of the newly provided software image.

While the authentication part can be performed by any means, the focus of this example is to ensure that the encryption of the package, which needs to be decrypted by the update agent 230 (or any update agent or bootloader allowing for OS changes) is done in a way that it can be considered quantum-resistant. The main aim for this is to ensure that the performed encryption can not be easily tampered with quantum logic.

To do so, the proposal is to use the Classic McEliece algorithm to encrypt the OS image that will later be delivered to the SE 200. The decryption of the package will be done by the update agent 230 (or any other bootloader or update agent present in the TRE) and finally enabled.

At 590, the update service 100 generates an image containing the plain image and optionally information regarding the update to be performed. At 591, the update service 100 generates the software module update package using the Classic McEliece algorithm. At 592, the software module update package is sent by the update service 100 to the SE 200.

At 593, the SE 200 may verify if the protected image package is acceptable. At 594, the SE 200 decrypts the received image using the Classic McEliece algorithm and writes the image package (e.g., the new OS) into the memory of the SE 200. AT 595, the SE 200 verifies if the OS was properly loaded and boots the new OS.

The example of Fig. 8 particularly relates to the embodiment in which transmitting data packages from the update service to the SE via the secured communication session includes generating, by the update service, a software image including the data packages, generating, by the update service, an update package by encrypting the software image using a Classic McEliece-algorithm, performing authentication between update service and SE, and transmitting the update package and the Classic McEliece-algorithm to the SE.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of reference signs

- 10: device, user equipment, UE
- 100: update service, off-card entity
- 150: remote unit
- 200: secure element, SE, tamper resistant element, TRE
- 210: processor
- 220: memory
- 230: update agent, bootloader
- 300: communication link
- 400: method
- 410: establishing communication session
- 420: securing communication session
- 430: transmitting data packages
- 440: clearing communication session
- 450: key pair
- 451: public key
- 452: private key
- 453: shared secret
- 460: second key pair
- 461: public key
- 462: private key
- 463: shared secret
- 470: third key pair
- 471: public key
- 472: private key
- 473: shared secret
- 483: combined shared secret

## Claims

1. A method (400) for updating a software module on a secure element (200, SE), the method comprising:
establishing (410) a communication session between an update service (100) and the SE (200);
securing (420) the communication session by quantum-resistant cryptographic measures;
transmitting (430) data packages from the update service (100) to the SE (200) via the secured communication session to update the software module;
clearing (440) the communication session when the data packages are successfully transmitted to the SE (200).

2. The method (400) of claim 1,
wherein the data packages contain software update packages for an operating system of the SE (200).

3. The method (400) of claim 1 or 2,
wherein the securing (420) the communication session includes:
establishing a key for the communication session.

4. The method (400) of claim 3,
wherein establishing a key for the communication session includes using a key-encapsulation mechanism (KEM);
wherein the SE (200) generates a keypair of public-private keys, transmits the public key to the update service (100), and the update service (100) uses the generated public key and generates an encapsulation and a shared secret, and the shared secret is transmitted to the SE (200);
wherein the update service (100) generates a protected image including the data packages using an encryption algorithm using keys derived from the shared secret.

5. The method (400) of claim 3,
wherein establishing a key for the communication session includes using a key-encapsulation mechanism (KEM), generating a keypair of public-private keys, and using a live-unicast key-handling method;
wherein the update service (100) requests a public key from the SE (200), the SE (200) generates the keypair of public-private keys and sends the public key to the update service (100).

6. The method (400) of claim 3,
wherein establishing a key for the communication session includes using a key-encapsulation mechanism (KEM);
wherein the SE (200) includes a unique keypair of public-private keys;
wherein the update service (100) requests the public key by an out-of-band mechanism.

7. The method (400) of claim 3,
wherein establishing a key for the communication session includes using a key-encapsulation mechanism (KEM);
wherein each of a plurality of SEs (200) includes the same keypair of public-private keys;
wherein the update service (100) requests the public key by an out-of-band mechanism.

8. The method (400) of claim 3,
wherein establishing a key for the communication session includes obtaining various shared secrets, namely a first secret and a second secret;
wherein the first secret is generated with classical cryptography and the second secret is generated using quantum resistant procedures.

9. The method (400) of any one of claims 1 to 8,
wherein transmitting (430) data packages from the update service (100) to the SE (200) via the secured communication session includes
generating, by the update service (100), a software image including the data packages;
generating, by the update service (100), an update package by encrypting the software image using an NTRU-algorithm;
performing authentication between update service (100) and SE (200);
transmitting the update package and the NTRU-algorithm to the SE (200).

10. The method (400) of any one of claims 1 to 8,
wherein transmitting (430) data packages from the update service (100) to the SE (200) via the secured communication session includes
generating, by the update service (100), a software image including the data packages;
generating, by the update service (100), an update package by encrypting the software image using a Classic McEliece-algorithm;
performing authentication between update service (100) and SE (200);
transmitting the update package and the Classic McEliece-algorithm to the SE (200).
